Europäisches Patentamt

European Patent Office

Office européen des brevets

(19)

(11) Numéro de publication: **0 343 713**

**A1**

## (12) DEMANDE DE BREVET EUROPEEN

(21) Numéro de dépôt: 89201235.2

(51) Int. Cl.⁴: **A01K 97/12**

(22) Date de dépôt: 17.05.89

(30) Priorité: 27.05.88 IT 8494888

(43) Date de publication de la demande:
29.11.89 Bulletin 89/48

(84) Etats contractants désignés:
AT BE CH DE ES FR GB GR IT LI LU NL SE

(71) Demandeur: **Pillon, Graziano**
**Via IV Novembre, 64**
**I-36040 Orgiano (Vicenza)(IT)**

(72) Inventeur: **Pillon, Graziano**
**Via IV Novembre, 64**
**I-36040 Orgiano (Vincenza)(IT)**
Inventeur: **Nardelli, Bruno**
**Via Libertà, 22**
**I-36040 Orgiano (Vincenza)(IT)**

(74) Mandataire: **Bettello, Luigi, Dott. Ing.**
**Via Col d'Echele, 25**
**I-36100 Vicenza(IT)**

(54) **Dispositif porte-canne à pêche pour la détection automatique du happement de l'hameçon.**

(57) Un dispositif porte-canne à pêche pour la détection automatique du happement de l'hameçon par le poisson, comprend un pied (1) susceptible d'être ancré dans le sol, un réceptacle (7) pour l'engagement du manche (8) d'une canne à pêche, un support (5) propre à être introduit de manière amovible dans le pied et articulé au réceptacle afin de permettre à celui-ci d'osciller, des moyens élastiques (16) pour rappeler ledit réceptacle par rapport au support, des moyens d'alarme optiques et/ou acoustiques (24, 26) montés sur ce support, et des moyens de détection (19) propres à déceler les mouvements relatifs du réceptacle et du support et à piloter en réponse les moyens d'alarme précités.

FIG. 1

La présente invention concerne un dispositif porte-canne à pêche pour la détection automatique du happement de l'hameçon par le poisson.

On a déjà proposé des dispositifs d'alarme aussi bien sonores qu'optiques (tels que des clochettes et des lampes-témoins) destinés à être montés sur le scion d'extrémité d'une canne à pêche et à être actionnés par la ligne, de façon à ce que lorsque le poisson mord, la traction exercée sur la ligne provoque le déclenchement de l'alarme. Ce type de dispositif, bien que très utile en lui-même, est néanmoins d'emploi pratique réduit du fait qu'il constitue un obstacle aux opérations usuelles de lancer de la ligne, cette dernière, tout particulièrement au cours de la pêche de nuit, s'accrochant fréquemment autour des dispositifs d'alarme. En outre, par suite de la force centrifuge considérable qui s'exerce sur le scion d'extrémité de la canne au cours du lancer, il arrive fréquemment que le dispositif d'alarme se détache et tombe à l'eau.

Il est également connu d'utiliser des petites plateformes susceptibles d'être plantées dans le sol pour un bon ancrage et destinées à supporter une canne à pêche après le lancer de la ligne, en attente du happement. Ces plateformes sont ordinairement constituées par un plateau muni d'une ou plusieurs pointes susceptibles d'être enfoncées dans le sol, et par un montant tubulaire qui fait saillie vers le haut à partir du plateau précité. Ce montant tubulaire est susceptible de recevoir la tige d'un tube-support qui fait fonction de réceptacle pour recevoir le manche d'une canne à pêche. Ce réceptacle peut être fixe ou bien être articulé, en étant alors suceptible d'être immobilisé par un écrou sur la tige de façon à permettre le réglage de l'inclinaison de la canne à pêche.

La présente invention a pour but de réaliser un dispositif porte-canne à pêche de conception nouvelle, propre à éliminer les inconvénients ci-dessus rappelés et à assurer la détection automatique du happement sans cependant gêner les opérations de lancer de la ligne.

Un autre but de la présente invention réside dans le fait que le dispositif porte-canne doit aussi bien permettre le réglage aisé de la position de la canne, tout particulièrement son inclinaison par rapport à l'horizontale, que d'assurer l'émission d'un signal d'alarme en cas de happement de l'hameçon.

Un autre but encore de l'invention est de faire en sorte que le dispositif porte-canne n'implique aucune modification sensible de la canne à pêche, ni de la plate-forme d'ancrage et du support, en étant ainsi susceptible d'être employé avec des équipements déjà existants.

La présente invention a encore pour but de réaliser un dispositif porte-canne qui présente une structure très simple et qui soit donc d'un coût de fabrication réduit.

Le dispositif porte-canne à pêche suivant l'invention est défini à la revendication 1. En fait il comporte un pied susceptible d'être ancré dans le sol et un réceptacle pour l'engagement d'une canne à pêche, un support articulé au réceptacle et apte à être engagé dans le pied d'ancrage, des moyens d'alarme portés par le support précité, et des moyens de détection propres à déceler les déplacements relatifs entre lesdits réceptacle et support et à actionner les moyens d'alarme.

D'autres caractéristiques et avantages de la présente invention apparaîtront mieux de la description détaillée qui va être fournie d'un exemple de réalisation donné simplement à titre d'illustration non limitative, avec référence aux dessins annexés dans lesquels :

La fig. 1 est une vue en perspective d'un dispositif porte-canne suivant l'invention.

La fig. 2 montre à échelle agrandie et avec des parties arrachées un support articulé au réceptacle.

La fig. 3 est un schéma électrique des moyens d'alarme, et

La fig. 4 montre un détail de la fig. 3.

En se référant aux figures ci-dessus mentionnées, on notera que le dispositif porte-canne comprend un pied susceptible d'être ancré dans le sol, constitué par exemple par une petite plateforme 1 à profil circulaire à partir de laquelle divergent une ou plusieurs pointes 2 dirigées vers le bas pour assurer un bon ancrage dans le sol 3, et au-dessus de laquelle s'élève un montant tubulaire 4, préférablement à section cir culaire.

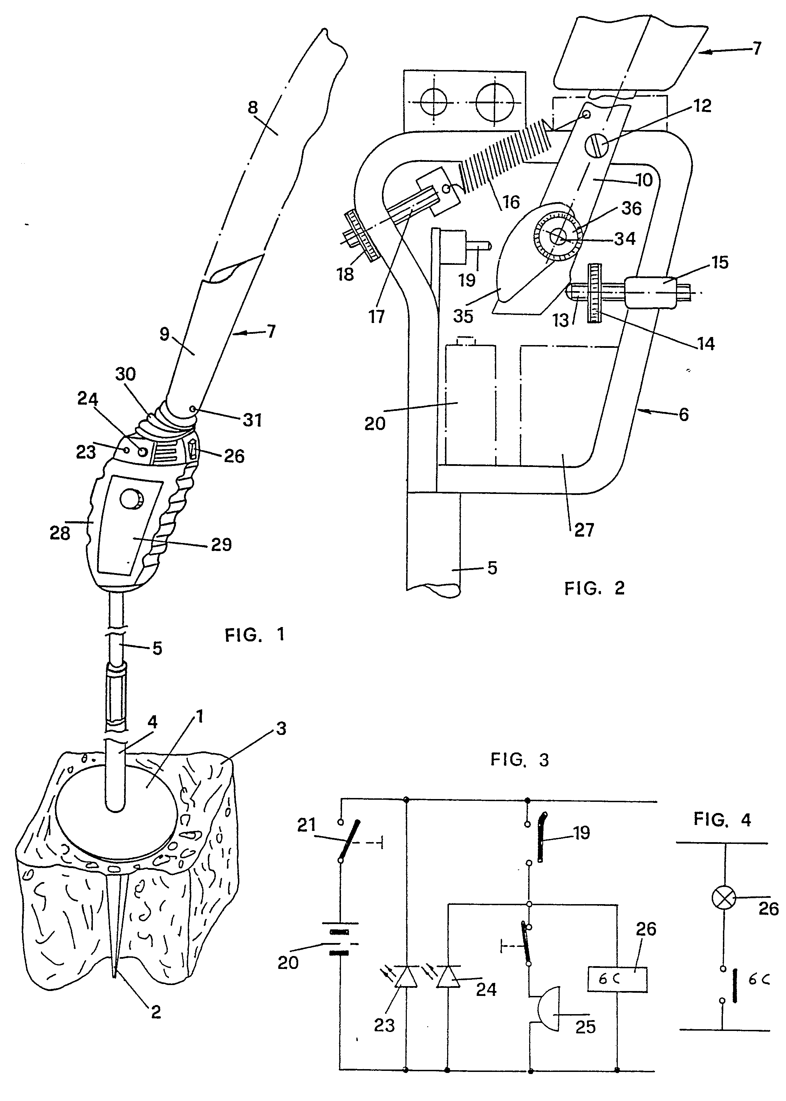

Dans le montant 4 vient s'engager une tige 5 d'un support globalement référencé 6 en fig. 2. Ce support peut par exemple avoir la forme d'un bâti fermé sur lui-même et est rigidement fixé ou rendu solidaire de la tige inférieure 5, tandis que vers le haut il soutient un réceptacle 7 destiné à accueillir le manche 8 d'une canne à pêche. Le réceptacle 7 peut par exemple être constitué par un morceau de tube 9 dans lequel vient s'engager le manche 8, et par un embout 10 articulé en 12 au support 6. Le pivot 12 est de préférence porté par l'élément supérieur du bâti-support 6, de façon à ce que l'embout 10 puisse s'étendre dans l'espace intérieur dudit bâti jusqu'à venir au voisinage immédiat d'une butée réglable 13.

Cette butée réglable 13 est par exemple constituée par une vis qui est pourvue d'une tête 14 à périphérie moletée et qui peut se visser ou se dévisser dans un écrou 15 soudé ou autrement fixé au support 6. Le réglage en position de la butée 13 permet de modifier l'inclinaison du réceptacle 7 par rapport à la verticale.

De manière avantageuse, on associe au réceptacle 7 des moyens de rappel élastique qui sont constitués par exemple par un ressort hélicoïdal 16 dont l'une des extrémités est attachée à l'embout 10 en un point situé entre le réceptacle 7 et le pivot 12, tandis que l'extrémité opposée est fixée au bâti 6, préférablement avec interposition de moyens réglables de tension, tels qu'une vis 17 engagée dans un trou traversant ledit bâti 6, ces moyens étant susceptibles d'être commandés de l'extérieur de ce bâti par l'intermédiaire d'un écrou à périphérie moletée 18. Par suite de la présence du ressort 17, l'embout 10 est élastiquement sollicité pour porter contre la butée 13.

A l'opposé par rapport à cette butée 13 et sur le trajet d'oscillation de l'embout 10, est prévu un micro-interrupteur 19 qui est destiné à être actionné lorsque l'embout et par conséquent le réceptacle 7 tournent autour du pivot 12 en s'éloignant de la butée 13. Le micro-interrupteur 19 constitue l'un des composants du circuit électrique représenté en fig. 3, qui comprend une batterie ou pile 20 d'alimentation en série à laquelle peut être associé un interrupteur général 21 qui à la position de fermeture assure l'éclairage d'un led ou autre lampe-témoin 23 monté en parallèle.

Lorsque l'interrupteur 19 est fermé par l'embout 10, il alimente un moyen d'alarme lumineux tel qu'un led ou lampe-témoin 24, et/ou une alarme sonore telle qu'une sonnette 25, ou encore un signal lumineux 26 constitué par exemple par un petit projecteur qui, à la manière montrée en fig. 4, est prévu soit sur le bâti 6, soit en un emplacement convenable de la canne à pêche.

Comme on peut le voir en fig. 1 et 2 l'ensemble du circuit des fig. 3 et 4 peut être réalisé sous la forme d'une carte susceptible d'être logée, avec la ou les piles 20, à l'intérieur du bâti 6 qui de manière avantageuse est entouré par un carter 28, lequel peut, lorsque désiré, être conformé à la manière d'une poignée et être muni d'un couvercle ou portillon de visite 29.

Avantageusement, entre le carter 28 et le réceptacle 7 peut être prévu un soufflet de protection 30 s'opposant aux infiltrations d'eau dans ledit carter, l'eau éventuellement recueillie ou autrement introduite à l'intérieur du réceptacle 7 pouvant s'écouler à l'extérieur à travers une perforation 31.

Lorsque désiré, on peut, pour l'alimentation du petit projecteur 26, prévoir sur un côté du carter une prise de courant (non représentée) adaptée à recevoir les conducteurs provenant d'une source supplémentaire de courant, formée par exemple par la batterie d'un véhicule automobile.

En outre, sur l'extrémité libre de l'embout 10 peut être articulée en 34 une came 35 qui est susceptible d'être réglée angulairement en position à l'aide d'un écrou 36. Le réglage de la position de cette camme 35 permet de modifier la sensibilité du dispositif aux mouvements oscillants de l'embout 10 et en conséquence du réceptacle 7.

Le fonctionnement du dispositif ci-dessus décrit est très simple. Une fois le dispositif monté en position, c'est-à-dire après que le pied 1 ait été enfoncé dans le sol, que la tige 5 ait été engagée dans le montant 4 et que le manche 8 de la canne à pêche ait été mis en place, après le lancer, à l'intérieur du réceptacle 7, le pêcheur ferme l'interrupteur général 21 de sorte que la lampe-témoin 23 indique que le dispositif est en position d'attente. Dès qu'un poisson mord à l'hameçon, il assure une traction sur la ligne qui à son tour détermine l'abaissement de la canne à pêche. Ceci provoque le déplacement du réceptacle 7 autour du pivot 12, jusqu'à ce que l'embout 10 ou sa came 35 vienne porter contre le micro-interrupteur 19 en alimentant de la sorte les moyens d'alarme lumineux 24, 26 ou acoustiques 25.

On notera qu'en faisant tourner la tige 5 à l'intérieur du montant 4, on peut, tout particulièrement lorsque l'ouverture dudit montant est établie à une section circulaire, orienter la position de la canne latéralement dans les deux sens.

L'invention ci-dessus décrite est susceptible de nombreuses modifications et variantes à l'intérieur de l'étendue de la protection assurée par les revendications.

Les matériaux ainsi que les dimensions peuvent varier en fonction des exigences.

## Revendications

1. Dispositif porte-canne à pêche pour la détection automatique du happement de l'hameçon par le poisson, du genre comportant un pied (1) susceptible d'être ancré dans le sol et un réceptacle (7) pour l'engagement d'une canne à pêche, caractérisé par le fait qu'il comprend un support (5-6) qui est articulé au réceptacle et est susceptible d'être engagé dans le pied d'ancrage, des moyens d'alarme (24-25-26) portés par ledit support, et des moyens de détection (19) propres à déceler les déplacements relatifs entre lesdits réceptacle et support et à mettre en action les moyens d'alarme.

2. Dispositif suivant la revendication 1, caractérisé par le fait que le support (5-6) comprend une tige amovible (5) susceptible d'être engagée dans le pied d'ancrage (1), et une structure (6) en forme de bâti qui porte à articulation le réceptacle (7).

3. Dispositif suivant la revendication 2, caractérisé par le fait de comprendre des moyens élastiques (16) pour le déplacement ou le rappel du réceptacle (7), ces moyens étant portés par la structure ou bâti (6).

4. Dispositif suivant l'une quelconque des revendications 2 ou 3, caractérisé par le fait que le réceptacle (7) comporte un embout (10) qui s'étend à l'intérieur de ladite structure ou bâti (6).

5. Dispositif suivant la revendication 4, caractérisé par le fait que les moyens de détection sont portés par la structure ou bâti et comprennent un micro-interrupteur (19) prévu sur la course de déplacement de l'embout (10) pour l'actionnement des moyens d'alarme.

6. Dispositif suivant la revendication 5, caractérisé par le fait que les moyens de détection comprennent des moyens de butée (13-14-15) disposés de façon à limiter de manière réglable le déplacement de l'embout (10) et en conséquence l'orientation verticale du réceptacle (7).

7. Dispositif suivant la revendication 6, caractérisé par le fait que les moyens de butée comprennent une vis (13) placée sur la course de déplacement de l'embout (10), du côté opposé par rapport au micro-inter rupteur (19), cette vis se vissant dans un écrou (15) solidaire de la structure ou bâti (6).

8. Dispositif suivant l'une quelconque des revendications qui précèdent, caractérisé par le fait que les moyens d'alarme comprennent au moins une lampe-témoin (24).

9. Dispositif suivant l'une quelconque des revendications qui précèdent, caractérisé par le fait que les moyens d'alarme comprennent au moins une sonnerie (25).

10. Dispositif suivant l'une quelconque des revendications qui précèdent, caractérisé par le fait que les moyens d'alarme comprennent au moins un petit projecteur (26).

11. Dispositif suivant l'une quelconque des revendications qui précèdent, caractérisé par le fait que la structure ou bâti (6) comporte un carter de protection (28).

EP 0 343 713 A1

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CH-A-551135 (GILL) <br> * le document en entier * <br> --- | 1-8, 10, 11 | A01K97/12 |
| X | US-A-3646697 (JENNINGS) <br> * le document en entier * <br> --- | 1-9, 11 | |
| X | US-A-3560969 (FLEEMAN) <br> * le document en entier * <br> ----- | 1-11 | |

**DOMAINES TECHNIQUES RECHERCHES (Int. Cl.4)**

A01K

Le présent rapport a été établi pour toutes les revendications

| Lieu de la recherche | Date d'achèvement de la recherche | Examinateur |
|---|---|---|
| LA HAYE | 10 AOUT 1989 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)